# EUROPÄISCHE PATENTSCHRIFT

(11) **EP 1 275 333 B1**
(45) Veröffentlichungstag und Bekanntmachung des Hinweises auf die Patenterteilung: **12.10.2005**
(21) Anmeldenummer: 02014118.0
(22) Anmeldetag: 25.06.2002
(51) Int. Cl.: A47J 27/16

(54) **Dampfgargerät**
Steam cooking device
Appareil de cuisson à vapeur

(30) Priorität: 10.07.2001 DE 10132581
(43) Veröffentlichungstag der Anmeldung: 15.01.2003
(73) Patentinhaber: Imperial-Werke oHG, 32257 Bünde (DE)
(72) Erfinder: Berger, Uwe, 32278 Kirchlengern (DE); Dittrich, Hartmut, Dr., 32257 Bünde (DE); Metz, Thomas, 32257 Bünde (DE)

(56) Entgegenhaltungen:
- EP-A- 0 694 260
- US-A- 4 924 072
- US-A- 5 075 121

## Beschreibung

Die Erfindung betrifft ein Dampfgargerät mit einem Dampferzeuger und mehreren Garebenen in einem Garraum, in welchem eine Dampfeinlassöffnung als Verbindung zum Dampferzeuger und eine Dampfauslassöffnung angeordnet sind, wobei eine Temperaturmesseinrichtung dem Garraum zugeordnet und mit einer Steuereinrichtung verbunden ist.

Es ist allgemein bekannt, die Temperatur im Garraum über einen Temperatursensor zu erfassen und die Dampfzufuhr in den Garraum temperaturabhängig durch die Steuereinrichtung zu steuern. Dadurch wird gewährleistet, dass für die vorgegebene Garzeit die gewählte Temperatur am Temperatursensor eingehalten wird, aber an anderen Stellen des Garraumes abweichende Temperaturen auftreten.

Die DE 199 60 743 A1 offenbart ein derartiges Dampfgargerät, bei dem im Garraum eine Dampfeinlassöffnung im oberen Bereich der dem Dampferzeuger zugewandten Seitenwand angeordnet ist, durch welche der Dampf aus dem Dampferzeuger in den Garraum gelangt. Die Dampfauslassöffnung und ein Temperaturfühler befinden sich dagegen in einem unteren Bereich der Rückwand. Diese Anordnung soll ein gleichzeitiges Garen von Gargut gleicher Beschaffenheit auf mehreren Garebenen bei gleicher Temperatur durch eine gleichmäßige Temperaturverteilung im Garraum ermöglichen. Allerdings ergibt sich oft die Notwendigkeit, mehrere Lebensmittel mit unterschiedlichen Garzeiten für ein Menü zuzubereiten. Das erfordert aber, das Gargut entsprechend seiner Garzeiten nacheinander in den Garraum einzubringen. Dazu muss zwischenzeitlich die Gerätetür geöffnet werden, wobei Dampf aus dem Garraum austritt. Neben einer erhöhten Feuchtigkeitsbelastung im Arbeitsraum wird im Dampferzeuger bei Fortsetzung des Programms auch erneut Dampf erzeugt und wieder dem Garraum zugeführt. Das bedingt einen erhöhten Energieaufwand zur Dampferzeugung. Es hat sich außerdem gezeigt, dass die tatsächlichen Temperaturen an diversen Stellen im Garraum von den durch den Temperaturfühler ermittelten Temperaturen abweichen. Dadurch treten bei ungünstigen Bedingungen im Garraum in den horizontal angeordneten Garebenen häufig Dampfschichten mit unterschiedlichen Temperaturen auf, die nicht kontrollierbar sind und das Garergebnis sogar negativ beeinflussen können.

Die US 5,075,121 offenbart ein Dampfgargerät mit einem Dampferzeuger, mit drei Garebenen in einem Garraum, in welchem drei als Dampfverteiler ausgebildete Dampfeinlassöffnungen als Verbindung zum Dampferzeuger angeordnet sind, wobei in den drei Garebenen jeweils separate Temperaturmesseinrichtungen angeordnet und mit einer Steuereinrichtung verbunden sind.

Der Erfindung stellt sich somit das Problem, ein energiesparendes Dampfgargerät mit Mitteln zum gezielten Steuern der Temperatur in einzelnen Garbereichen zu schaffen. Außerdem soll ein Verfahren zum Garen in einem derartigen Dampfgargerät für aus mehreren Teilen bestehendes Gargut, unabhängig von den Garzeiten der einzelnen Bestandteile, geschaffen werden.

Erfindungsgemäß wird dieses Problem durch ein Dampfgargerät mit den Merkmalen des Patentanspruchs 1 gelöst. Vorteilhafte Ausgestaltungen und Weiterbildungen der Erfindung ergeben sich aus den nachfolgenden Unteransprüchen.

Zwar ist es aus der EP 0 694 260 A1 bekannt, bei einem Brotbackofen eine kombinierte Beheizung aus Kontaktwärme- und Konvektionswärmeübertragung vorzusehen. Jedoch wird hierzu bei dem bekannten Brotbackofen unter anderem heiße Luft umgewälzt.

Die mit der Erfindung erreichbaren Vorteile bestehen insbesondere in einer steuerbaren Temperaturverteilung in allen Garbereichen. Durch den Garraumteiler zum Trennen der Garebenen in dem Garraum ist kein oder kaum ein Zwischenraum zu den Seitenbereichen vorhanden. Dabei ist jedem entstehenden Garbereich mindestens eine Dampfauslassöffnung zugeordnet, um eine genaue Trennung der unterschiedlichen Temperaturschichten in den Garbereichen zu ermöglichen. Vorteilhaft ist auch, dass nach einer Trennung des Garraumes nicht nur ein Garbereich sondem der gesamte Garraum nutzbar ist. In einer vorteilhaften Ausbildung ist ein großer Gargutträger als Garraumteiler eingesetzt, welcher in die seitlichen Auflagegitter einschiebbar ist. Je nach Wunsch können gezielt entweder eine gleichmäßige Temperaturverteilung im gesamten Garraum oder unterschiedliche Temperaturen in den einzelnen Garebenen vorherrschen . Dadurch wird ein gleichzeitiger Beginn und ein gemeinsames Ende beim Garen von Gargut mit unterschiedlichen Garzeiten ermöglicht, welches neben einer gleichzeitigen Zubereitung der Zutaten für ein Menü insbesondere den Vorteil bringt, dass eine Entlastung bei der Organisation der Speisenvorbereitung erfolgt. Diverse Zeiten wie Start- und/oder Endzeit und/oder Gardauer sind programmierbar, so dass zwischenzeitlich keine Aktivität bzw. Kontrolle vorgenommen werden muss und der Nutzer sich auch vom Gerät entfernen kann. Durch das gleichzeitige Garen der diversen Zutaten mit unterschiedlichen Garzeiten ist die Einstellung, Überwachung und Änderung der Parameter über eine Femsteuerung möglich.

In vorteilhaften Ausgestaltungen sind Anordnung, Größe, Form und/oder Querschnitt der Dampfeinlassöffnung und/oder der Dampfauslassöffnung veränderbar ausgebildet, so dass sie jeweils mehreren Garebenen zugeordnet sind. Es ist vorteilhaft, die Dampfeinlassöffnung und/oder die Dampfauslassöffnung mit Verstelleinrichtungen zu versehen, so dass sie in auswählbaren Teilbereichen verschließbar sind. Als besonders vorteilhaft erweist es sich, die Verstelleinrichtungen über die Temperaturmesseinrichtungen anzusteuern. Dadurch ist die Wahl der Größe der Dampföffnungen an die notwendigen Temperaturen in den Garebenen für zu garendes Gargut anzupassen. In einer weiteren vorteilhaften Ausgestaltung sind im Garraum Dampfeinlass- und/oder Dampfauslassöffnungen in den unterschiedlichen Garebenen angeordnet, welchen direkt die Temperaturmesseinrichtungen zugeordnet sind. Eine günstige Ausführungsvariante sieht auch vor, die Dampfeinlassöffnung in einer der oberen Garebenen und mindestens zwei Dampfauslassöffnungen in unterschiedlichen Garebenen anzuordnen. Ebenso ist es vorteilhaft, eine Anordnung der Dampfeinlassöffnung in der unteren und eine Anordnung der Dampfauslassöffnung in der oberen Garebene vorzusehen oder beide Dampföffnungen sind in der oberen Garebene angeordnet. Eine weitere Möglichkeit besteht darin, mindestens eine Dampfeinlassöffnung und eine Dampfauslassöffnung sowohl in einer oberen als auch in einer unteren Garebene anzuordnen.

Die durch das erfindungsgemäße Verfahren erreichbaren Vorteile bestehen insbesondere darin, dass Gargut aus mehreren Bestandteilen unabhängig von der jeweiligen Garzeit einzelner Bestandteile gleichzeitig gegart wird, wobei für Gargut mit gleicher Garzeit für alle Bestandteile eine gleiche Temperaturverteilung im Garraum und für Gargut mit unterschiedlicher Garzeit für die einzelnen Bestandteile eine unterschiedliche Temperaturverteilung in den Garbereichen ausgewählt und für den gesamten Garvorgang beibehalten wird. Die Temperaturen sind in den einzelnen Garbereichen durch die Temperaturmesseinrichtungen in Verbindung mit den in ihrer Anzahl und/oder Größe und/oder Querschnitt veränderbaren Dampfeinlassöffnungen und/oder Dampfauslassöffnungen über die Steuereinrichtung steuerbar.

Ein Ausführungsbeispiel der Erfindung ist in den Zeichnungen rein schematisch dargestellt und wird nachfolgend näher beschrieben. Es zeigen:
- Figur 1: Dampfgargerät mit geöffneter Gerätetür
- Figur 2: Dampfgargerät mit mehreren Temperatursensoren, Dampfeinlass- und Dampfauslassöffnungen im Garraum,
- Figur 3: Dampfgargerät mit in Größe, Form und Anordnung veränderbaren Dampfeinlass- und Dampfauslassöffnungen
- Figur 4: Dampfgargerät mit einem Garraumteiler im Garraum

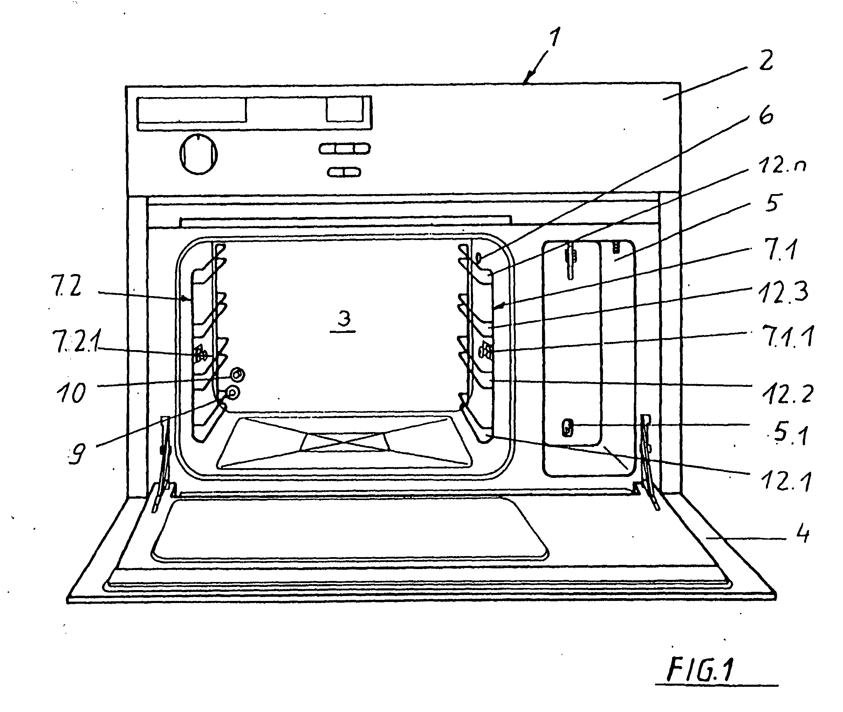

Die Figur 1 zeigt ein drucklos arbeitendes Dampfgargerät (1) entsprechend dem Stand der Technik mit einer Bedienblende (2), einem Garraum (3) und geöffneter Gerätetür (4). An der Bedienblende (2) sind diverse Bedien- und Anzeigeelemente angeordnet. Seitlich neben dem Garraum (3) ist ein Aufnahmeraum (5) für einen zur besseren Übersicht nicht dargestellten Wasserbehälter, der über ein Ventil (5.1) mit dem dahinter angeordneten Dampferzeuger verbunden ist, der ebenfalls nicht gezeigt ist. Der Dampf aus dem Dampferzeuger gelangt durch eine im oberen Bereich einer Seitenwand des Garraums (3) angeordnete Dampfeinlassöffnung (6) in den Garraum (3). Der vorzugsweise im unteren Bereich der Rückwand angeordneten Dampfauslassöffnung (9) ist eine Temperaturmesseinrichtung (10) zugeordnet, wobei beide sich natürlich auch an einer anderen Seitenwand befinden können. Als Temperaturmesseinrichtung (10) sind beispielsweise herkömmlich bekannte Temperatursensoren einzusetzen. Im Garraum (3) sind an den Seitenwänden seitliche Aufnahmegitter (7.1, 7.2) zum Einschub für Gargutträger (8) angeordnet. Um eine bessere Reinigung des Garraums (3) vornehmen zu können, sind diese Aufnahmegitter (7.1, 7.2) lösbar und mit einem Schnellverschluss (7.1.1, 7.2.1) versehen. Es ist aber ebenso möglich, die Aufnahmegitter (7.1, 7.2) durch Schrauben mit den Garraumwänden zu verbinden oder sie unlösbar im Garraum (3) festzulegen.

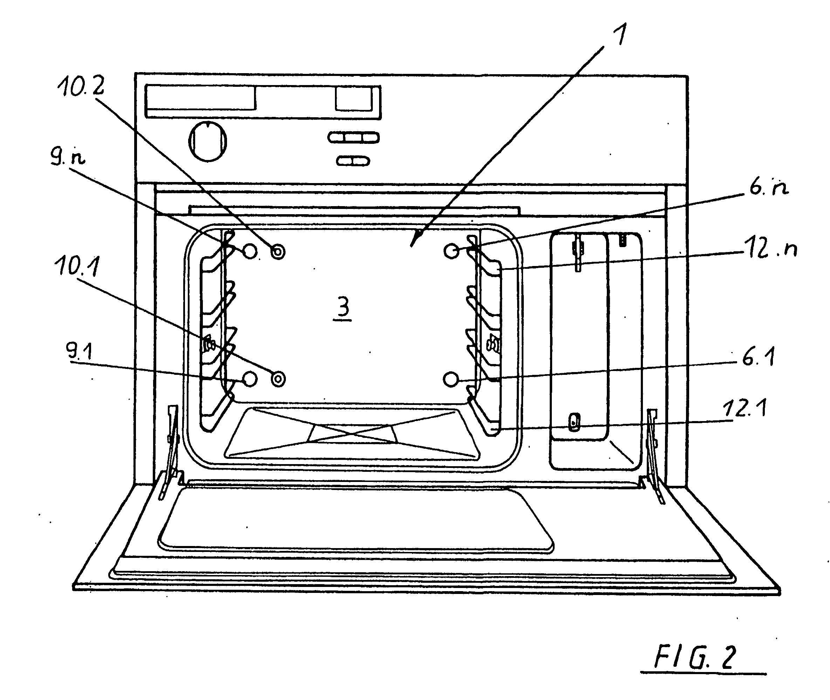

In der Figur 2 ist ein Dampfgargerät (1) mit Garraum (3) dargestellt, wobei dieser mit mehreren Temperaturmesseinrichtungen (10.1, 10.2) sowie zwei Dampfeinlass- (6.1, 6.n) und Dampfauslassöffnungen (9.1, 9.n) ausgestattet ist. Es sind zwar jeweils nur 2 Öffnungen mit zugeordneten Temperaturmesseinrichtungen (10.1, 10.2) dargestellt, aber diese Anzahl lässt sich entsprechend der Anzahl der Einschubmöglichkeiten in die Aufnahmegitter (7.1, 7.2) weiter erhöhen. Die horizontalen Garebenen (12.1, 12.n) sind den Einschubhöhen in den Aufnahmegittem (7.1, 7.2) zugeordnet. Für eine gezielte Temperatursteuerung im Garraum (3) sind mindestens 2 Temperaturmesseinrichtungen (10.1, 10.2) in unterschiedlichen Garebenen (12.1, 12.n) vorzusehen, welche den dort befindlichen Dampfauslassöffnungen (9.1, 9.n) zugeordnet sind. Dieses ist besonders dann vorteilhaft, wenn beispielsweise das gesamte zu einem Menü erforderliche Gargut unabhängig von den Garzeiten einzelner Bestandteile auf einmal in den Garraum (3) des Dampfgargerätes (1) eingebracht und ohne Unterbrechung gegart werden kann. Es können dann auch Programmierungen bzw. Einstellungen oder Überwachung Ober eine Fernsteuerung vorgenommen werden. Das erleichtert insbesondere die Arbeitsorganisation der Person, die für die Bereitstellung des Essens verantwortlich ist. Es sollte jedoch beachtet werden, dass Gargut mit der längsten Garzeit in die obere Garebene (12.n) und Gargut mit der kürzesten Garzeit in die untere Garebene (12.1) geschoben werden sollte. Über mehrere Dampfeinlassöffnungen (6.1, 6.n) gelangt der Dampf aus dem Dampferzeuger in den Garraum (3). Die Temperaturmesseinrichtungen (10.1, 10.2) sind den Dampfauslassöffnungen (9) zugeordnet, erfassen die in den unterschiedlichen Garebenen (12.1 - 12.n) vorherrschenden Temperaturen und steuern über die vorwiegend hinter der Bedienblende (2) angeordnete Steuerelektronik des Dampfgargerätes (1) die Temperaturen in ihnen entsprechend zugeordneten Garebenen (12.1 - 12.n).

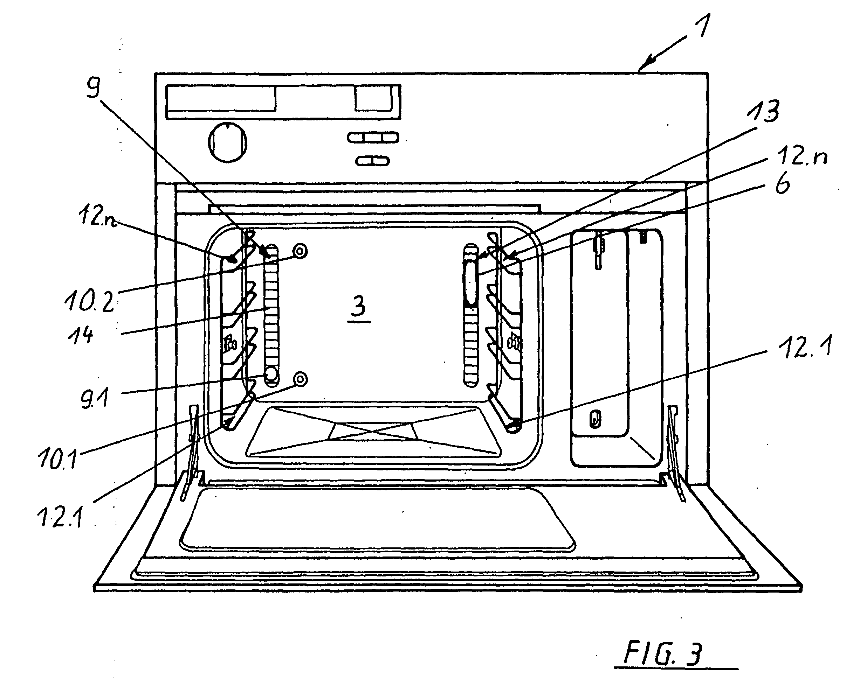

In Figur 3 ist ein Dampfgargerät (1) mit Garraum (3) gezeigt, in welchem langgestreckte Dampfeinlass- (6) und Dampfauslassöffnungen (9) angeordnet sind, die sich jeweils über mehrere Garebenen (12.1 - 12.n) erstrecken. Verstelleinrichtungen (13, 14) öffnen die Dampfeinlass- (6) und Dampfauslassöffnungen (9) abhängig von der notwendigen Temperatur für unterschiedliches Gargut und den genutzten Garebenen (12.1 - 12.n). Dadurch kann sich eine Dampfeinlass- (6) über mehrere Garebenen (12.1 - 12.n) erstrecken oder in unterschiedlichen Garebenen (12.1 - 12.n) angeordnet sein. Durch ein Dampfgargerät (1), bei dem die Querschnitte der Dampfeinlass- (6) und/oder Dampfauslassöffnungen (9) in ihrer Form und/oder Größe und/oder Querschnitt veränderbar sind, können mehrere horizontal angeordnete Garebenen (12.1 - 12.n) mit diversen Temperaturschichtungen entstehen. Die Temperaturmesseinrichtungen (10.1 - 10.m) erfassen die in den unterschiedlichen Garebenen (12.1, 12.n) vorherrschenden Temperaturen und steuern über die Steuereinrichtung Verstelleinrichtungen (13, 14) an, um die für einen konkreten Garvorgang nicht notwendige Bereiche der Dampfauslassöffnungen (9) zu verschließen. Die Gerätetür (4) kann während des gesamten Garprozesses geschlossen bleiben und das gesamte Menü ist gleichzeitig fertig. Andererseits ist es aber auch möglich, durch die gleiche Anordnung von Dampfeinlass- (6), Dampfauslassöffnungen (9) und Temperaturmesseinrichtungen (10.1, 10.2) eine gleichmäßige Temperaturverteilung in den Garebenen (12.1 - 12.n) zu erreichen.

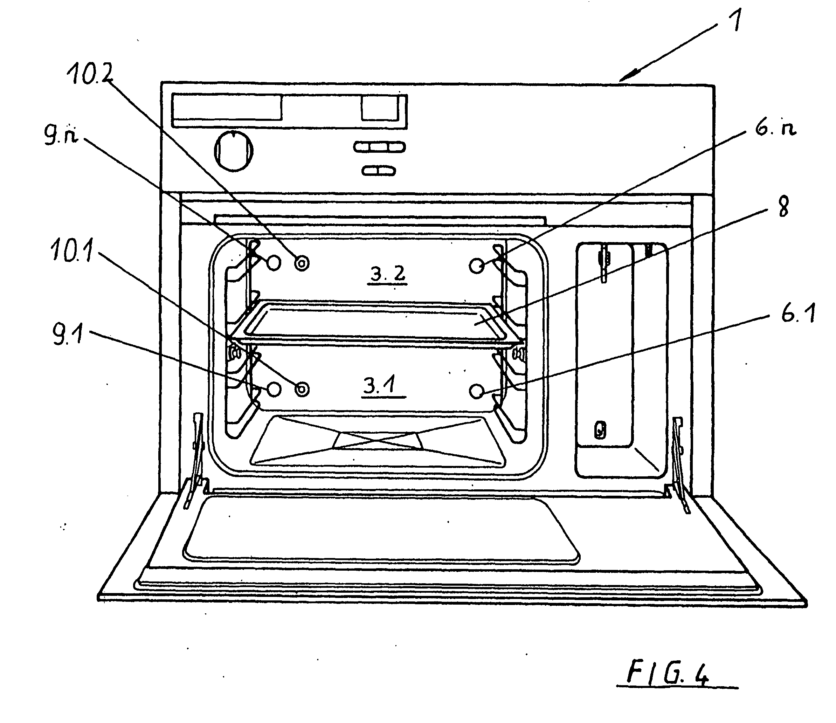

Die Figur 4 zeigt ein Dampfgargerät mit geöffneter Gerätetür (4), wobei sich im Garraum (3) ein Garraumteiler (8) befindet, der den Garraum (3) in einen oberen Garbereich (3.2) und einen unteren Garbereich (3.1) unterteilt. Jedem abgetrennten Garbereich (3.1, 3.2) ist dabei eine Dampfeinlass- (6.1, 6.n), eine Dampfauslassöffnung (9.1, 9.n) und eine Temperaturmesseinrichtung (10.1, 10.2) zugeordnet, so dass eine gezielte Steuerung der Temperaturen in den einzelnen Garbereichen (3.1, 3.2) möglich ist. Der Garraumteiler (8) lässt nur einen geringen Zwischenraum zu den Seitenwänden des Garraumes (3). Es ist möglich, einen großen handelsüblichen Gargutträger als Garraumteiler (8) in unterschiedlichen Höhen in die Aufnahmegitter (7.1, 7.2) einzuschieben. Dadurch kann der Innenbereich des Garraums (3) in horizontal getrennt angeordnete Garbereiche (3.1 - 3.n) unterteilt werden und jeder Garbereich (3.1 - 3.n) eine separate Temperatur erhalten. In jedem Garbereich (3.1, 3.2) können sich beispielsweise eine Dampfeinlassöffnung (6.1 - 6.n) und eine Dampfauslassöffnung (9.1 - 9.n) befinden, wobei jeder Dampfauslassöffnung (9.1, 9.n) mindestens eine Temperaturmesseinrichtung (10.1, 10.2) zugeordnet ist. Auch durch mehrere oder in Größe bzw. Querschnitt veränderbare Dampfeinlass- (6) und/oder Dampfauslassöffnungen (9), die mindestens zwei Garebenen (12.1 -12.n) zugeordnet sind, sowie mit den Temperaturmesseinrichtungen (10) ist es ebenfalls möglich, in einem Dampfgargerät (1) mehrere Garebenen (12.1 - 12.n) gleichzeitig zu nutzen, wobei in jeder Garebene (12.1 - 12.n) entweder unterschiedliche Temperaturen oder auch in allen Garebenen (12.1 -12.n) eine gleichmäßige Temperaturverteilung einstellbar ist.

## Patentansprüche

1. Dampfgargerät mit einem Dampferzeuger, mit mehreren Garebenen (12.1, 12.n) in einem Garraum (3), in welchem eine Dampfeinlassöffnung(6.1) als Verbindung zum Dampferzeuger angeordnet ist, wobei jeweils separate Temperaturmesseinrichtungen (10.1 -10.m) in mindestens zwei Garebenen (12.1 - 12.n) angeordnet und mit einer Steuereinrichtung verbunden sind und wobei ein Garraumteiler (8) im Garraum (3) entnehmbar angeordnet ist und den Garraum (3) in zwei Garbereiche (3.1, 3.2) mit jeweils mindestens einer Garebene (12.1, 12.n) unterteilt,
**dadurch gekennzeichnet,**
**dass** jedem Garbereich (3.1, 3.2) mindestens eine an dem Garraum (3) angeordnete Dampfauslassöffnung (9.1, 9.n) zugeordnet ist.

2. Dampfgargerät nach Anspruch 1, in welchem mehrere Dampfeinlassöffnungen (6.1 - 6.n) als Verbindung zum Dampferzeuger angeordnet sind,
**dadurch gekennzeichnet,**
**dass** jedem Garbereich (3.1, 3.2) eine an dem Garraum (3) angeordnete Dampfeinlassöffnung (6.1, 6.n) und eine Temperaturmesseinrichtung (10.1, 10.2) zugeordnet ist.

3. Dampfgargerät nach Anspruch 2,
**dadurch gekennzeichnet,**
**dass** in mindestens zwei Garebenen (12.1 - 12.n) jeweils eine Dampfeinlassöffnung (6.1- 6.n) und jeweils eine Dampfauslassöffnung (9.1 - 9.n) angeordnet sind, wobei die Temperaturmesseinrichtungen (10.1- 10.m) den Dampfauslassöffnungen (9.1 - 9.n) zugeordnet sind.

4. Dampfgargerät nach Anspruch 1,
**dadurch gekennzeichnet,**
**dass** die Dampfeinlassöffnung (6.n) in der oberen Garebene (12.n) und die Dampfauslassöffnung (9.1) in einer unteren Garebene (12.1, 12.2) und die Dampfauslassöffnung (9.n) in einer oberen Garebene (12.n, 12.n-1) angeordnet sind.

5. Dampfgargerät nach Anspruch 2,
**dadurch gekennzeichnet,**
**dass** die Dampfeinlassöffnung (6.1) in der unteren Garebene (12.1) und die Dampfeinlassöffnung (6.n) in der oberen Garebene (12.n) und mindestens eine Dampfauslassöffnung (9.1- 9.n) in einer unteren Garebene (12.1, 12.2) oder in einer oberen Garebene (12.n, 12.n-1) angeordnet sind.

6. Dampfgargerät nach Anspruch 1,
**dadurch gekennzeichnet,**
**dass** die Dampfeinlassöffnung (6.1) in der unteren Garebene (12.1) und die Dampfauslassöffnung (9.1) in der unteren Garebene (12.1) und die Dampfauslassöffnung (9.n) in der oberen Garebene (12.n) angeordnet sind.

7. Dampfgargerät nach mindestens einem der Ansprüche 1 bis 6,
**dadurch gekennzeichnet,**
**dass** die Dampfeinlassöffnung (6) und/oder die Dampfauslassöffnung (9) in Größe und/oder Form veränderbar ausgebildet sind.

8. Dampfgargerät nach mindestens einem der Ansprüche 1 bis 7,
**dadurch gekennzeichnet,**
**dass** die Dampfeinlassöffnung (6) und/oder die Dampfauslassöffnung (9) mit Verstelleinrichtungen (13; 14) wenigstens teilweise verschließbar sind, wobei die Verstelleinrichtungen (13; 14) durch die Temperaturmesseinrichtungen (10.1 - 10.m) ansteuerbar sind.

9. Dampfgargerät nach mindestens einem der Ansprüche 7 oder 8,
**dadurch gekennzeichnet,**
**dass** die in der Größe veränderbaren Dampfeinlassöffnung (6) und/oder Dampfauslassöffnung (9) mehreren Garebenen (12.1 - 12.n) zugeordnet sind.

10. Dampfgargerät nach einem der Ansprüche 1 bis 9,
**dadurch gekennzeichnet,**
**dass** der Garraumteiler (8) als ein großer in seitliche Auflagegitter (7.1, 7.2) einschiebbarer Gargutträger ausgebildet ist.

11. Verfahren zum Garen in einem Dampfgargerät nach einem der Ansprüche 1 bis 10,
wobei dass mehrteilige Gargut gleichzeitig in einem Garprozess ohne Unterbrechung gegart wird, und wobei für Gargut mit gleicher Garzeit für alle Bestandteile eine gleiche Temperaturverteilung im Garraum (3) und für Gargut mit unterschiedlicher Garzeit für einzelne Bestandteile eine unterschiedliche Temperaturverteilung in den Garbereichen (3.1, 3.2) ausgewählt und für den gesamten Garvorgang beibehalten wird und dass die Temperaturen in den einzelnen Garbereichen (3.1, 3.2) durch die Temperaturmesseinrichtungen (10.1 - 10.m) in Verbindung mit den in ihrer Anzahl und/oder Größe und/oder Querschnitt veränderbaren Dampfeinlassöffnungen (6) und/oder Dampfauslassöffnungen (9) über die Steuereinrichtung steuerbar sind.

12. Verfahren nach Anspruch 11,
**dadurch gekennzeichnet**
**dass** das Gargut mit längster Garzeit in dem Garbereich (3.2) bei hoher Temperatur und das Gargut mit kürzester Garzeit im Garbereich (3.1) bei geringer Temperatur gleichzeitig im Garraum (3) gegart wird.

## Claims

1. Household appliance for steam cooking having a steam generator, said appliance including several cooking levels (12.1, 12.n) in one cooking chamber (3), in which chamber a steam inlet opening (6.1) is disposed as connection to the steam generator, wherein separate temperature measuring devices (10.1-10.m) are disposed respectively in at least two cooking levels (12.1-12.n) and are connected to a control device and wherein a cooking chamber divider (8) is disposed in the cooking chamber (3) so as to be removable and divides the cooking chamber (3) into two cooking regions (3.1, 3.2) with in each case at least one cooking level (12.1, 12.n). **characterised in that** at least one steam outlet opening (9.1, 9.n), disposed in the cooking chamber (3), is associated with each cooking region (3.1, 3.2).

2. Household appliance for steam cooking according to claim 1, in which a plurality of steam inlet openings (6.1-6.n) are disposed as connection to the steam generator, **characterised in that** a steam inlet opening (6.1, 6.n) and a temperature measuring device (10.1, 10.2), disposed in the cooking chamber (3), are associated with each cooking region (3.1, 3.2).

3. Household appliance for steam cooking according to claim 2, **characterised in that** a steam inlet opening (6.1-6.n) and a steam outlet opening (9.1-9.n) are each disposed in at least two cooking levels (12.1-12.n) respectively, wherein the temperature measuring devices (10.1-10.m) are associated with the steam outlet openings (9.1-9.n).

4. Household appliance for steam cooking according to claim 1, **characterised in that** the steam inlet opening (6.n) is disposed in the upper cooking level (12.n) and the steam outlet opening (9.1) is disposed in a lower cooking level (12.1, 12.2) and the steam outlet opening (9.2) is disposed in an upper cooking level (12.n, 12.n-1).

5. Household appliance for steam cooking according to claim 2, **characterised in that** the steam inlet opening (6.1) is disposed in the lower cooking level (12.1) and the steam inlet opening (6.n) is disposed in the upper cooking level (12.n) and at least one steam outlet opening (9.1-9.n) is disposed in a lower cooking level (12.1, 12.2) or in an upper cooking level (12.n, 12.n-1).

6. Household appliance for steam cooking according to claim 1, **characterised in that** the steam inlet opening (6.1) is disposed in the lower cooking level (12.1) and the steam outlet opening (9.1) is disposed in the lower cooking level (12.1) and the steam outlet opening (9.n) is disposed in the upper cooking level (12.n).

7. Household appliance for steam cooking according to at least one of claims 1 to 6, **characterised in that** the size and/or shape of the steam inlet opening (6) and/or the steam outlet opening (9) are changeable.

8. Household appliance for steam cooking according to at least one of claims 1 to 7, **characterised in that** the steam inlet opening (6) and/or the steam outlet opening (9) are closable at least partially by means of adjusting devices (13; 14), wherein the adjusting devices (13; 14) are controllable by means of temperature measuring devices (10.1-10.m),

9. Household appliance for steam cooking according to at least one of claims 7 or 8, **characterised in that** the steam inlet opening (6) and/or steam outlet opening (9)), the size of which can be changed, are associated with a plurality of cooking levels (12.1-12.n).

10. Household appliance for steam cooking according to one of claims 1 to 9, **characterised in that** the cooking chamber divider (8) is in the form of a large carrier for the food to be cooked, which is insertable into a lateral supporting rack (7.1, 7.2).

11. Method for cooking in a household appliance for steam cooking according to one of claims 1 to 10, wherein the food for cooking, made up of multiple parts, is cooked at the same time in one cooking process without interruption, and wherein a same temperature distribution is selected in the cooking chamber (3) for food with the same cooking time for all components and a variable temperature distribution is selected in the cooking regions (3.1, 3.2) for food with variable cooking times for individual components and is maintained for the entire cooking process, and in that the temperatures in the individual cooking regions (3.1, 3.2) are controllable via the control device by means of the temperature measuring devices (10.1-10.m) in connection with the steam inlet openings (6) and/or steam outlet openings (9), the number and/or size and/or cross-section of which are changeable.

12. Method according to claim 11, **characterised in that** the items to be cooked requiring the longest cooking time are cooked in the cooking region (3.2) at a high temperature and at the same time the items to be cooked requiring the shortest cooking time are cooked in the cooking region (3.1) at a lower temperature.

## Revendications

1. Appareil de cuisson à la vapeur équipé d'un générateur de vapeur, avec plusieurs plans de cuisson (12.1, 12.n) situés dans une chambre de cuisson (3) dans laquelle se trouve un orifice (6.1) d'admission de vapeur établissant une liaison avec le générateur de vapeur, des dispositifs distincts (10.1-10.m) de mesure de température étant respectivement agencés dans au moins deux plans de cuisson (12.1-12.n) et étant reliés à un dispositif de commande, un séparateur (8) étant logé de manière amovible dans la chambre de cuisson (3), et scindant ladite chambre de cuisson (3) en deux zones de cuisson (3.1, 3.2) qui présente chacune au moins un plan de cuisson (12.1, 12.n),
**caractérisé par le fait**
**qu'**au moins un orifice (9.1, 9.n) de sortie de vapeur, ménagé sur la chambre de cuisson (3), est affecté à chaque zone de cuisson (3.1, 3.2).

2. Appareil de cuisson à la vapeur selon la revendication 1, dans lequel sont disposés plusieurs orifices (6.1-6.n) d'admission de vapeur établissant une liaison avec le générateur de vapeur,
**caractérisé par le fait**
**que** chaque zone de cuisson (3.1, 3.2) est associée à un orifice (6.1, 6.n) d'admission de vapeur ménagé sur la chambre de cuisson (3), et à un dispositif (10.1, 10.2) de mesure de température.

3. Appareil de cuisson à la vapeur selon la revendication 2,
**caractérisé par le fait**
**qu'**un orifice respectif (6.1-6.n) d'admission de vapeur et un orifice respectif (9.1-9.n) de sortie de vapeur sont situés dans au moins deux plans de cuisson (12.1-12.n), les dispositifs (10.1-10.m) de mesure de température étant affectés aux orifices (9.1-9.n) de sortie de vapeur.

4. Appareil de cuisson à la vapeur selon la revendication 1,
**caractérisé par le fait**
**que** l'orifice (6.n) d'admission de vapeur est situé dans le plan supérieur de cuisson (12.n), l'orifice (9.1) de sortie de vapeur est situé dans un plan inférieur de cuisson (12.1, 12.2), et l'orifice (9.n) de sortie de vapeur est situé dans un plan supérieur de cuisson (12.n, 12.n-1).

5. Appareil de cuisson à la vapeur selon la revendication 2,
**caractérisé par le fait**
**que** l'orifice (6.1) d'admission de vapeur est situé dans le plan inférieur de cuisson (12.1), l'orifice (6.n) d'admission de vapeur est situé dans le plan supérieur de cuisson (12.n), et au moins un orifice (9.1-9.n) de sortie de vapeur est situé dans un plan inférieur de cuisson (12.1, 12.2) ou dans un plan supérieur de cuisson (12.n, 12.n-1).

6. Appareil de cuisson à la vapeur selon la revendication 1,
**caractérisé par le fait**
**que** l'orifice (6.1) d'admission de vapeur est situé dans le plan inférieur de cuisson (12.1), l'orifice (9.1) de sortie de vapeur est situé dans le plan inférieur de cuisson (12.1), et l'orifice (9.n) de sortie de vapeur est situé dans le plan supérieur de cuisson (12.n).

7. Appareil de cuisson à la vapeur selon au moins l'une des revendications 1 à 6,
**caractérisé par le fait**
**que** l'orifice (6) d'admission de vapeur et/ou l'orifice (9) de sortie de vapeur sont réalisés de taille et/ou de forme variable.

8. Appareil de cuisson à la vapeur selon au moins l'une des revendications 1 à 7,
**caractérisé par le fait**
**que** l'orifice (6) d'admission de vapeur et/ou l'orifice (9) de sortie de vapeur peuvent être au moins partiellement obturés par des dispositifs réglables ou déplaçables (13 ; 14), lesdits dispositifs réglables ou déplaçables (13 ; 14) étant commandables par l'intermédiaire des dispositifs (10.1-10.m) de mesure de température.

9. Appareil de cuisson à la vapeur selon au moins l'une des revendications 7 ou 8,
**caractérisé par le fait**
**que** l'orifice (6) d'admission de vapeur et/ou l'orifice (9) de sortie de vapeur, de taille variable, sont affectés à plusieurs plans de cuisson (12.1-12.n).

10. Appareil de cuisson à la vapeur selon l'un des revendications 1 à 9,
**caractérisé par le fait**
**que** le séparateur (8) de la chambre de cuisson est réalisé comme un grand support de produit à cuire, pouvant être introduit par coulissement dans des grilles latérales d'appui (7.1, 7.2).

11. Procédé de cuisson dans un appareil de cuisson à la vapeur selon l'une des revendications 1 à 10, le produit à cuire, présentant plusieurs composants ou parties, étant simultanément cuit en un processus de cuisson, sans interruption, sachant qu'une répartition de température identique est sélectionnée, dans la chambre de cuisson (3), pour un produit à cuire présentant un temps de cuisson identique pour tous les composants ou parties, et qu'une répartition de température différente est sélectionnée, dans les zones de cuisson (3.1, 3.2), pour un produit à cuire présentant un temps de cuisson différent pour des parties ou composants individuels, lesdites répartitions étant conservées pendant tout le processus de cuisson ; et dans lequel les températures régnant dans les zones individuelles de cuisson (3.1, 3.2) peuvent être pilotées par le dispositif de commande, par l'intermédiaire des dispositifs (10.1-10.m) de mesure de température, en association avec les orifices (6) d'admission de vapeur et/ou les orifices (9) de sortie de vapeur dont le nombre et/ou la taille et/ou la section transversale sont variables.

12. Procédé selon la revendication 11,
**caractérisé par le fait**
**que** le produit à cuire présentant le temps de cuisson le plus long est cuit à haute température dans la zone de cuisson (3.2), et le produit à cuire présentant le temps de cuisson le plus court est cuit à faible température dans la zone de cuisson (3.1), la cuisson s'opérant simultanément dans la chambre de cuisson (3).
